(19) Europäisches Patentamt / European Patent Office / Office européen des brevets

(11) **EP 2 685 407 A1**

## (12) EUROPEAN PATENT APPLICATION

(43) Date of publication:
**15.01.2014 Bulletin 2014/03**

(51) Int Cl.:
*G06Q 10/00* (2012.01)

(21) Application number: **12176026.8**

(22) Date of filing: **11.07.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **FUJITSU LIMITED
Kawasaki-shi,
Kanagawa 211-8588 (JP)**

(72) Inventors:
• **Hu, Bo
Huntingdon, Cambridgeshire PE29 6JL (GB)**
• **Naseer, Aisha
Hayes, Middlesex UB4 8FE (GB)**
• **Fukuda, Kenichi
Hayes, Middlesex UB4 8FE (GB)**

(74) Representative: **Hutchison, James
Haseltine Lake LLP
300 High Holborn
London, Greater London WC1V 7JH (GB)**

(54) **Computer system, method and program to quantify quality of service provision**

(57)    A computer system (2) operable to quantify quality of service provision, the computer system (2) comprising: a data log (4) configured to store comments made by one or more users regarding a service; a data extraction module (6) configured to extract one or more service pathway instances from the data log (4); a comparison module (8) configured to select one of the extracted pathway instances and compare the selected pathway instance with one or more representative pathways; and a calculation module (10) configured to calculate a quality of service provision value based on the similarity between the selected pathway instance and the representative pathways.

FIG. 1

**Description**

The present invention relates to a computer system, method and program to quantify quality of service provision, particularly but not exclusively for use in healthcare services.

At the heart of any successful healthcare system is a desire to provide the highest standard of care and to ensure the safety and satisfaction of patients. As a result, quality measures are being employed more predominantly in the healthcare domain to provide an indication of the standard of treatment being delivered.

The use of such quality measures is becoming even more important as collaboration between healthcare providers increases. For example, an individual may be examined in one centre, be given various tests in another centre, undergo medical operations in a third centre, and go through a recovery process in yet another centre. Consequently, it is necessary to evaluate the different phases of the clinical pathway to facilitate clear and unambiguous inter-centre communications and to avoid misunderstanding and confusion. It is also necessary to evaluate the quality of the entire distributed process so as to ensure that the distribution of the process does not result in a deterioration of the standard of care.

By properly assessing and auditing the quality of service, any issues and problems can be easily identified and rectified.

The Quality of (care) Service Provision (QoSP) may be assessed using either outcome-centric approaches or process-centric approaches. Outcome-centric approaches define quality in terms of the actual medical outcome of a clinical procedure. For example, the degree of recovery may be quantified by comparing the improvement in health against the population average. In contrast, process-centric approaches define quality in terms of the adherence of a process to a particular clinical pathway or workflow (i.e. steps in a healthcare procedure such as taking blood tests, conducting MRI scans, giving specific medications, etc.). Similar methods may also be used to assess the Quality of Prevention (QoP).

In either approach, significant human involvement is required. For example, the process-oriented approach requires evaluation scoring from human users (i.e. individual care receivers and caregivers) and the outcome-oriented approach relies on user feedback.

Consequently, the computed QoSP or QoP measures are subjective and thus present significant inter-individual and intra-individual variances. It is therefore difficult to compare quality measures for different regions and hospitals. In addition, the evaluation process is time-consuming and labour-intensive and may become an extra burden for both caregivers and care receivers. Moreover, in general, personalisation plays an important role in the evaluation of (health) service delivery. Accordingly, any measures should take into account the status of individual receivers of healthcare services. Finally, both process and outcome-oriented approaches lack a mechanism to harvest the emergent semantic from the mass (i.e. the real-life "voice of customers" of the healthcare services).

It is therefore desirable to create a quality measure for service provision and prevention which can be easily understood, compared and communicated. It is also desirable that these measures may be obtained with minimal direct human involvement.

According to an aspect of the invention, there is provided a computer system operable to quantify quality of service provision. The computer system comprises: a data log configured to store comments made by one or more users regarding a service; a data extraction module configured to extract one or more service pathway instances from the data log; a comparison module configured to select one of the extracted pathway instances and compare the selected pathway instance with one or more representative pathways; and a calculation module configured to calculate a quality of service provision value based on the similarity between the selected pathway instance and the representative pathways.

The term "computer system" can refer to any computing system with memory, processing capability and inputs and outputs, for instance to a simple system with computing functionality in a single location (for example a server and possibly links to various devices) or to a more complex partially or fully distributed system or to a computer system provided as a "cloud" service.

The term "user" can refer to any receiver of a service. However, the users are not necessarily users of the computer system itself.

The data store may be any type of data repository provided the comments stored therein are the true opinions of the users toward the service.

A pathway instance may define the actual interactions between the user and the service provider and the chronological order of these interactions.

The representative pathway is provided for comparison purposes and does not necessarily represent good quality.

The selected pathway instance and the representative pathways may be represented as graphs. A graph in this sense is an abstract representation of a set of objects (vertices) where some pairs of the objects are connected by links (edges). Typically, a graph is depicted in diagrammatic form as a set of nodes or dots representing the vertices which are joined by lines or curves which represent the edges.

The calculation module may be configured to determine the similarity between the selected pathway instance and the representative pathways based on graph edit distance. Graph edit distance essentially computes the distance between two graphs by counting the edit operations needed to transform one graph into another.

A calculation of the graph edit distance may use weights which correspond to the sentimental significance of an activity within a pathway. In other words, the edit operations may be weighted depending on the sentimental significance of an activity. For example, if a particular activity is always associated with a positive or negative experience (sentimental significance), it may be assumed that the activity is a strong factor in defining a user's attitude towards the service. Accordingly, the required edit operation to transform another activity into such an activity will have a relatively large weight.

The graph edit distance may be calculated using semantic distance. That is, the graph edit distance may identify the required edit operations based on the meaning of the nodes. This may also factor in ontological relationships. For example, if one node mentioned Drug A and the other node mentioned Drug B, the semantic distance may be based on the detailed drug descriptions which may, for example, include the structure, indication, usage, adverse side effects, etc.

The representative pathways may be guideline pathways. For example, in the healthcare domain, clinical practice guidelines may be used as representative pathways. In other applications, the guideline pathway may represent what is perceived as "best practice". That is, the guideline pathways are considered to represent good quality.

The data extraction module may be further configured to perform sentiment analysis on the one or more extracted pathway instances. The data extraction module may form one or more sentiment-based pathway models based on this sentiment analysis. In other words, the sentiment analysis may allow guideline pathways to be formed based on the actual experiences of users, instead of perceived best practice. This may be invaluable in defining what users actually consider to be good and bad quality. The sentiment-based pathway models may be derived using process mining techniques. The pathway models may also be ailment and location specific.

The representative pathways may comprise the sentiment-based pathway models. The sentiment-based pathway models may be used in addition to the guideline pathways. Both positive and negative pathway models may be derived and used to calculate the quality of service provision value.

The data extraction module may be configured to identify an event onset and an event end based on comments contained in the data log. A pathway instance may be formed from comments made between (and including) the event onset and the event end.

The data extraction module may be further configured to offset comments in time based on their content. That is, if the comment indicates that an event occurred at a different time to that at which the comment was made, the data extraction module may make adjustments to the pathway instance to provide the correct chronological order of events.

The data log may comprise social media data which may be acquired from one or more social media platforms. For example, the data log may comprise Internet blogs, such as Twitter and Facebook. The computer system may use the social media platforms directly (thus forming the data log) or the comments made therein may be extracted into a dedicated data log.

The data log may contain comments made in a certain time window. A filter may be used so that only potentially relevant comments are stored in the data log.

The service may be a healthcare service. The service may be provided by any number of distributed service providers.

The calculation module may be further configured to calculate a quality of prevention value. The quality of prevention value may indicate how successful an intervention has been in preventing the onset of an ailment. The quality of prevention value may be based on the quality of service provision to date, a probability of the user developing health problems, and/or the compliance of the user to a healthy lifestyle.

A contribution of the quality of service provision to the calculated quality of prevention value may decay with time elapsed since termination of the service.

The various components or modules described may be provided by the same hardware resource.

According to another aspect of the invention there is provided a computer-implemented method operable to quantify quality of service provision. The method comprises: extracting one or more service pathway instances from a data log containing comments made by one or more users regarding a service; selecting one of the extracted pathway instances and comparing the selected pathway instance with one or more representative pathways; and calculating a quality of service provision value based on the similarity between the selected pathway instance and the representative pathways.

This method is equivalent to the system aspect described above and therefore features of the system as herein before described are applicable equally to the method aspect.

According to another aspect of the invention, there is provided a computer program which when executed on a computer carries out the method of the preceding method aspect and/or which when downloaded onto a computer system causes it to become the computer system of the apparatus aspect as variously set out above.

The present invention can provide numerical values which define quality of service provision and quality of prevention. These values are defined objectively and can be easily comprehended and compared. Accordingly, this information can be used by individuals when selecting service providers and when seeking health advice. The invention may also be used by regulators as a complementary means to evaluate and compare the quality of care providers. Moreover, the invention can be used to provide personalised health predictions.

The invention allows a quality of service provision value to be calculated based on both best practice recommended by authorities and best practice gained from real life data. The invention can therefore provide a means of highlighting inefficiencies in existing CPGs and aligning protocols with what is perceived as good quality by individuals.

As all of the parameters used in the calculation process are well defined and well grounded (bearing statistic or conceptual semantics), the resultant values are well-formed and provide an alternative to widely used subjective quality measurements.

An abundance of invaluable information is readily available from social media platforms, and thus it is possible to derive such quality indicators without any direct interrogation of individuals. This improves efficiency and also increases the reliability of the information.

In addition, the invention utilises domain knowledge when computing the distance or similarity between a pathway instance and a representative pathway, thus allowing human involvement to be reduced further still.

For a better understand of the invention and to show more clearly how it may be carried into effect, reference will now be made, by way of example, to the accompanying drawings in which:

Figure 1 is a schematic view of a computer system according to an embodiment of the present invention;

Figure 2 is a schematic implementation of the computer system of Figure 1;

Figure 3 is a functional overview of the operation of the computer system;

Figure 4 is an operational view of a quality of service provision calculation performed by the computer system; and

Figure 5 is an operational view of a quality of prevention calculation performed by the computer system.

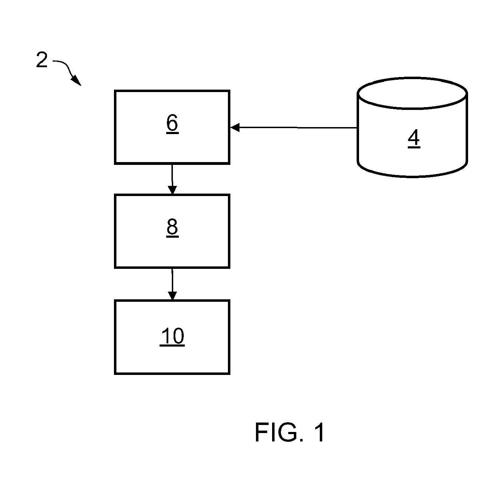

**Figure 1** shows a diagrammatic representation of a computer system 2 according to an embodiment of the invention which is operable to quantify Quality of Service Provision (QoSP). In particular, the computer system may be used to assess the QoSP for healthcare services. In such applications, the computer system 2 may also be used to assess the Quality of Prevention (QoP).

The computer system 2 comprises a data log 4. The data log 4 contains comments made by one or more users regarding a service which they receive. Such comments may be made via social media platforms, such as Twitter and Facebook. However, other types of records may be used, provided they contain the true opinions of the users toward the service.

Where the data log 4 contains comments made via social media platforms, it may be necessary to filter the comments so that the data log 4 contains only comments which are potentially relevant to the service of interest. A filter (not shown) may be used to identify potentially relevant comments which are entered into the data log 4 and to discard unrelated comments. For example, the comments may be classified into healthcare and non-healthcare comments. The filter may identify relevant comments based on key words or using a machine-learning based classification. A time window may also be applied such that the data log 4 contains only comments made during a specific period of time.

The computer system 2 further comprises a data extraction module 6 which is in communication with the data log 4. The data extraction module 6 is configured to extract one or more pathway instances from the comments made in the data log 4. A pathway instance defines the actual interactions between the user and the service provider and the chronological order of these interactions.

A comparison module 8 is provided which is configured to compare a selected pathway instance with one or more representative pathways. The representative pathways may be guideline pathways which are considered to represent best practice for the specific service. For example, in healthcare, Clinical Practice Guidelines (CPGs) define the appropriate course of action for dealing with specific ailments. The comparison module 8 therefore assesses how well the selected pathway instance adheres to the representative pathway.

The judgment of the comparison module 8 is conveyed to a calculation module 10 which is configured to calculate a QoSP value based on the similarity between the selected pathway instance and the representative pathway.

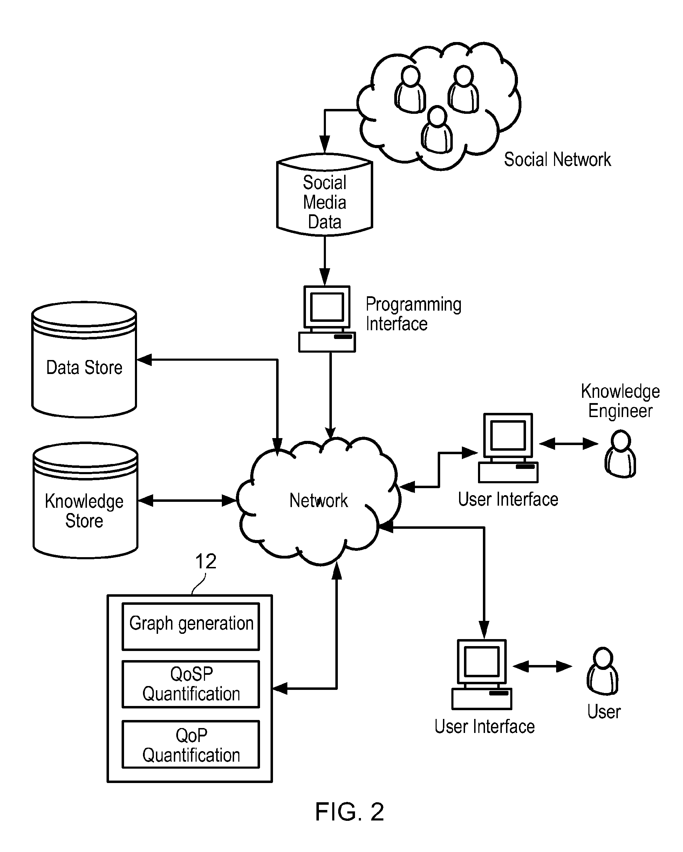

As shown in **Figure 2,** the computer system 2 may be implemented over a network. Social media data may be downloaded over the network via an application programming interface and stored in a data store. The functions of one or more of the data extraction module 6, comparison module 8 and calculation module 10 may be performed by an analysis unit 12 which is remote from the data store. The operation of the computer system 2 will be described in more detail below, however essentially the analysis unit 12 is responsible for generating graphs used in the comparison process, and quantifying QoSP and QoP.

A knowledge store may also be provided which contains information used in quantifying QoSP and QoP, as will be described in more detail below. In addition, the network may contain several user interfaces which allow users and knowledge engineers to input information into the system and to view information provided by the system. For example, a user may interrogate the computer system 2 to determine a QoSP value for a specific ailment and/or location or service provider.

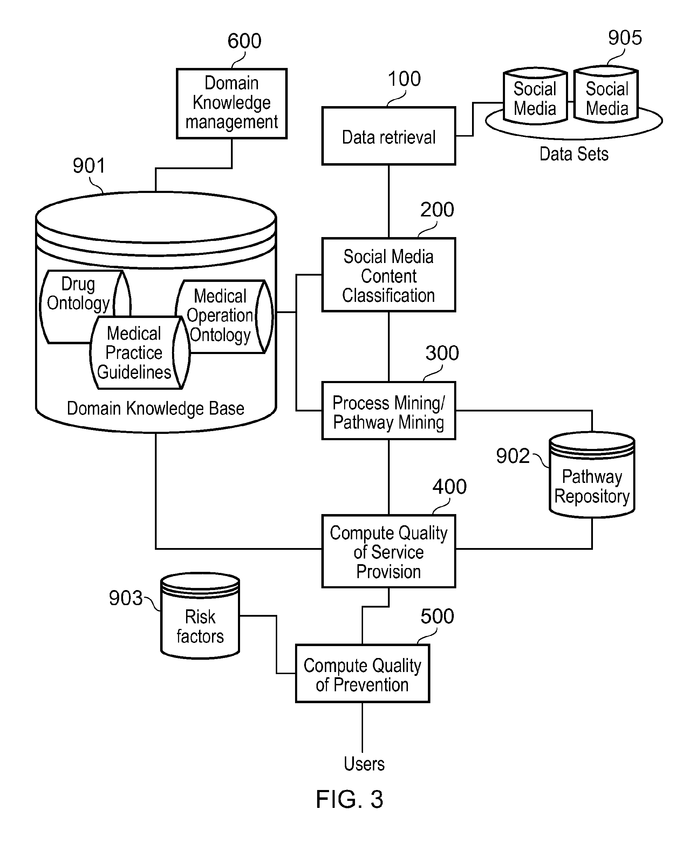

**Figure 3** provides a functional overview of the operation of the computer system 2 which will now be described with reference to a corresponding method for quantifying quality values.

In step 100, the computer system 2 retrieves data from social media platforms 905. When harvesting comments or messages from social media sites, it is common to set up a window covering only a limited period of time in order to reduce the search space.

The messages falling within this window may then be classified (in step 200) into relevant messages (i.e. relating to healthcare) and irrelevant messages.

An instance of a clinical pathway normally consists of the onset of an event, the end of an event, and a sequence of actions or activities between the event onset and event end.

There are identifiable patterns for both the onset and the end of events that allow machine-learning based classification to be used. Such classification of messages may be based on domain knowledge provided in domain knowledge base 901. Once the onset and end of an event have been identified, all the relevant messages between the onset and the end of the event will be extracted for further processing.

Human inspection of the intervening messages may be necessary when parallel events take place. For instance, the ending of an event may need to be manually associated with an event onset when there are overlapping events.

The start of an event (denoted by $h$) is normally marked with signal-like indicators. A standard machine-learning based classification can be used to detect such indicators. For example, possible indicators which may be identified in social media messages could be "off sick today", "coughing badly", etc. The timestamp automatically associated with the identified message will also be noted.

Named Entity Recognition (NER) techniques may also be applied to indentify time and date strings embedded in the messages. This information can then be used to offset the documented onset dates. For example, if on "31 January 2012", the message says "started coughing two days ago", the onset date can be refined to "29 January 2012".

The end of an event (denoted by $t$) can also be identified in a similar manner. For example, possible indicators which may be identified in social media messages could be "back to work", "fully recovered", etc. Again, machine-learning based classification and NER techniques can be used.

Although simple keyword matching approaches may be used to identify the onset and end of an event, machine-learning based classification is expected to provide higher accuracy.

When multiple events overlap, either human intervention is required or the messages between the earliest onset $h$ and the last $t$ are considered to belong to a single event.

All social media messages from the onset of an event until the end of the event are considered to be potentially relevant data for mining the clinical pathway.

A pathway instance is then constructed using the course of actions contained in the relevant social media message and the timestamp associated with each message. The actions contained in the pathway instance may be reordered to take into account any embedded time/data entities contained in the social media messages.

This process may be repeated to create a plurality of pathway instances. The pathway instances may then be grouped based on the type of event and the location. For example, the identified onset of the events may be used to group together similar types of event (i.e. similar diseases/ailments). This may be achieved using either string matching (based on simple string distance measures) or standard Information Retrieval (IR) techniques for document comparison. The pathway instances are then classified into detected catchment hospitals/clinics based on names either mentioned explicitly in the messages or, when names are not explicitly mentioned, the location information of the user.

The content of the social media messages is then interrogated to acquire sentiment values associated with each pathway instance. In other words, the feelings of the user regarding the service are extracted from the social media messages. Each message (or comment within a message) may be labelled with a sentiment value. This may be achieved using standard sentiment analysis techniques, such as those described in Godbole et al. (2007): "Large-Scale Sentiment Anaylsis for News and Blogs". Sentiment values are generally denoted as +, -,0 for positive, negative and neutral sentiments respectively.

The output of this step is a set of pathway instance $I$ each represented as a tuple $(\rho, \varphi)$. Here $\rho$ is in the form of $(h, a_1,..., a_n, t)$, where $a_1,..., a_n$ is the sequence of actions causing $h$ to transform into $t$, and $\varphi$ is the set of sentiment values for the pathway instance which are given as $\varphi \in \{+, -, 0\}$ for positive, negative, and neutral feelings.

While the pathway instances (obtained so far) can generally be considered as process log data, process mining techniques can be applied to abstract models from the instance data (step 300). Due to the grouping of the pathway instances, mined models should be ailment-specific, clinical-centre/location specific and sentiment specific. The result of process mining is a set of process models: $P^+$, $P^-$ and $P_0$ representing positive, negative, and neutral models respectively.

The derived models and pathway instances are stored in the Pathway Repository 902.

Generally, steps 100 to 300 are performed by the data extraction module 6.

At step 400, the computer system 2 quantifies the QoSP using the derived models and pathway instances. The computer system 2 also uses information stored in the domain knowledge base 901. In particular, the computer system 2 uses medical practice guidelines, such as CPGs.

To allow the CPGs to be machine readable and understandable, it is necessary to represent them in formal language. This formalisation can be achieved using Petri-Net or $\pi$-calculus. Clinical guidelines/protocols can be considered as a special form of business process model and thus may be presented as directed graphs having feedback loops. The guideline formalisation is performed as part of domain knowledge management (step 600) and the formalised guidelines are stored in the domain knowledge base 901.

At step 400, QoSP is computed based on the divergence of a pathway instance from the recommended CPGs (published by regional, national, or international governing bodies). Both the pathway instances and the CPGs can be represented as graphs. The divergence of the pathway instance from the CPG is therefore equal to the distance between two graphs.

The distance between two graphs, $G_1 = (V_1, E_1)$ and $G_2 = (V_2, E_2)$, is denoted as $\Delta(G_1, G_2)$. Standard graph distance algorithms may be used to determine this distance. For example, a graph edit distance algorithm may be used. The graph edit distance may be optimised using well-defined and well-grounded weights and by using domain ontologies to add context to the distance measure, as will be described in more detail below.

As described previously, the QoSP may be based on both the similarity of a pathway instance with a CPG and the similarity of the pathway instance with the models derived from the social media data. Accordingly, the QoSP is made up of a social media-based component ($QoSP_{socialmedia-based}$) and a CPG component ($QoSP_{CPG}$). The QoSP may thus be calculated using the following equation:

$$QoSP = \sqrt{(QoSP_{socialmedia-based} \cdot QoSP_{CPG})}$$

The social media-based component may be calculated using the following equation:

$$QoSP_{socialmedia-based} = sim(\iota, P^+) - sim(\iota, P^-)$$

In other words, the social media-based component is equal to the difference between the similarity of a pathway instance $I$ against which the QoSP is to be estimated to the positive model $P^+$ and the similarity of the pathway instance $I$ to the negative model $P^-$.

The CPG component may be calculated using the following equation:

$$QoSP_{CPG} = \frac{1}{|sim(P^+, CPG) - sim(\iota, CPG)| + \alpha}$$

where $\alpha = 1$ and thus restricts the value of $QoSP_{CPG}$ to between 0 and 1. As can be seen, $QoSP_{CPG}$ is calculated using the normalised distance between pathway instance $I$ and the CPG. The similarity between the pathway instance $I$ and the standard CPG is offset by the similarity between the positive model $P^+$ and the standard CPG. Accordingly, the CPG component factors in whether the CPG is similar to the positive model $P^+$ mined from social media. In other words, $QoSP_{CPG}$ takes into account whether the CPG actually corresponds to good quality in the eyes of the users.

If social media data is not available, $QoSP_{socialmedia-based}$ will be set to equal 1 so that the QoSP is estimated using the distance between a pathway instance and the standard CPG only.

As described previously, graph edit distance can be used to compute the distance between two graphs by counting the edit operations needed to transform one graph into another. Graph edit operations include: node replacement, node deletion/insertion and edge deletion/insertion. Each of these graph edit operations may have different weight values and thus provide different contributions to the distance. Let $E_\Delta$ be the set of all deleted or inserted edges, $V_A$ the set of all deleted or inserted nodes, and $P_S$ the set of all replaced (or renamed) nodes. $P_S$ relies on identifying a mapping (a bijective relation) between subgraphs of $G_1$ and $G_2$.

The similarity is converted from distance which is equivalent to graph edit distance and computed as follows:

$$\mathrm{sim}\left(G_1, G_2\right) = \left(1 - \Delta\left(G_1, G_2\right)\right)$$

$$\Delta\left(G_1, G_2\right) = \frac{1}{3}\left(\mathrm{Cost}(E_\Delta) + \mathrm{Cost}(V_\Delta) + \mathrm{Cost}(V_s)\right)$$

$$\mathrm{Cost}(E_\Delta) = \frac{\sum_{i=0}^{|E_\Delta|} w_i\left(e_i \in E_\Delta\right)}{|E_1| + |E_2|}$$

$$\mathrm{Cost}(V_\Delta) = \frac{\sum_{i=0}^{|V_\Delta|} w_i\left(v_i \in V_\Delta\right)}{|V_1| + |V_2|}$$

$$\mathrm{Cost}(P_s) = \frac{\sum_{i=0}^{|V_s|} w'_i\left(p_i \in P_s\right)}{|V_s|}$$

where Cost is the normalised cost (i.e. a penalty value) of the specified edit operation.

The computation is then focused on finding the optimal mapping that underpins $P_S$ and obtaining the weights.

Finding the optimal mapping between two graphs has been extensively researched and can be found efficiently using an A*-based algorithm.

The pool of pathway instances ($I$) may be used when computing the weights $w_i$ for the deleted or inserted edges and the deleted or inserted nodes. $I$ is further divided into $I^+$, $I^-$, and $I^0$ corresponding to positive, negative and neutral pathway instances. For an activity a belonging to an arbitrary instance in $I$, the weight may be defined using the following equation:

$$w = \begin{cases} \mathrm{frequency}(a), & \text{if } a \in I^+ \otimes a \in I^- \\ \mathrm{tf\text{-}idf}(a), & \text{if } a \in I^+ \wedge a \in I^- \\ 0, & \text{if } a \in I^0 \text{only} \end{cases}$$

In other words, if the activity a is found only in positive pathway instances $I^+$ or (denoted by ^) negative pathway instances 1- (but not both), it is assumed that the activity a is a sentiment defining factor and thus should be assigned a higher weight. In this case, the weight may be set so as to correspond to the frequency of the activity a in the pathway instances $I$. On the other hand, if the activity a is found in both positive pathway instances $I^+$ and (denoted by $\otimes$) negative pathway instances $I^-$, it is considered to be less important and is therefore subject to a term frequency-inverse document frequency (tf-idf) type weight adjustment. Activities which only fall within the neutral pathway instances $I^0$ are considered to not affect the sentiments of users and thus are not given a weight (i.e. they have a weight of zero).

If applicable, ontologies may be utilised when computing the weight for the replace node operation. Consequently, the weight attributed to the operation may correspond to the semantic distance between a pair of mapped nodes from both the source graph and the target graph respectively.

$$w' = \text{semantic-distance}(v_1, v_2)$$

Named Entity Recognition (NER) can be used to extract words from the activity titles. For example, NER may be used to identify names of medication, names of medical tests and names of medical operations.

For the node replacement operation, the cost function is simplified as the semantic distance between the replaced label and the replacement label. For instance, with Drug Ontology and Clinical Operation Ontology, it is possible to find the taxonomy-based distance when the contents of two node labels are not equivalent. For node labels that do not have corresponding ontological entities, a Cosine similarity/distance is obtained between the medical knowledge represented by the two nodes. For example, if one node mentioned Drug A and the other node mentioned Drug B, the semantic distance can be approximated as the Cosine distance between the two vectors presenting the detailed drug descriptions, e.g. structure, indication, usage, adverse side effects, etc. Standard information retrieval technology can be applied to acquire this information.

As described above, the cost function differentiates between the different operations by applying alternative weighting schemes. Specifically, the cost function applies a first weighting scheme for deleting or inserting edges and nodes which is based on the set of pathway instances. A second weighting scheme is applied for replacing nodes which is based on semantic distance.

The computer system 2 can also be used to calculate a Quality of Prevention (QoP) value (step 500). QoP is a dynamic value which reflects the outcome of continuous intervention. The computer system calculates a QoP value using the following equation:

$$\text{QoP} = -\log(\text{QoSP} \cdot e^{-\lambda(t_i - t_0)} \cdot \text{QoLife}(\delta_i, P_{rf}) \cdot \text{QoCom}(\varepsilon))$$

The calculated QoP value is therefore based on the quality of (care) service provided so far, the probability of the individual developing health problems (QoLife), and the quality of compliance to a healthy lifestyle (QoCom). The computer system 2 computes the QoP using risk factor data (P(RF)) from database 903.

The component $\text{QoSP} \cdot e^{-\lambda(t_i - t_0)}$ indicates that the QoP depends on the quality of care service that one has received so far. It is assumed that the effect of such services on the continued wellbeing of an individual will diminish over time after the care has ceased. For example, the ability of medication to protect the individual from future health issues may be expected to decrease over time. Therefore, a time decaying factor is introduced to account for this.

$\text{QoSP} \cdot e^{-\lambda(t_i - t_0)}$ may be set to equal 1 if there has been no previous treatment or if no a priori knowledge of existing treatment has been raised.

The QoLife is the maximum probability that the individual is going to suffer from a health problem φ based on the distribution of risk factors, $P$(RF), across major health problems and the health profile of the individual ε (i.e. the individual's risk factor profile). That is:

$$\text{QoLife}(\Phi) = \max_{\varphi \in \Phi} p_{t_i}(\varphi | \varepsilon)$$

The distribution is computed against all 26 major health risk factors defined by the World Health Organization (WHO). The risk factor based distribution of deaths and disability-adjusted life-years (DALYs) is treated as the baseline distribution, as defined in Rodgers et al. (2004): "Distribution of Major Health Risks: Findings from the Global Burden of Disease Study".

The distribution across different diseases is defined as:

$$p(\varphi) = \frac{\text{PAF}_\varphi \cdot B_\varphi}{\sum_{\tau \in RF} \text{PAF}_\varphi \cdot B_\varphi}$$

where $\tau \in RF$ is an arbitrary risk factor, $PAF_\varphi$ is the population attributable fraction of a risk factor and $B_\varphi$ is the burden of disease $\varphi$. The values of $PAF_\varphi$ and $B_\varphi$ can be found from WHO reports. The above distribution can also be refined against different age groups and different levels of exposure to derive more accurate results. The quality of life is approximated as a measure of population based disease burden to take into account both personal and socioeconomic

impacts. $QoCom(\varepsilon) = D_{KL}(P_{t_{i'}}, P_{t_j})$ indicates how well the individual has complied with a healthy lifestyle or how much effort the individual has made to improve his/her health condition. This is computed as the discrepancy between the distribution the individual was originally aligned with and the distribution the individual is projected to after the elapsed time. Again, the risk factor based distribution of deaths and DALYs may be treated as the baseline distribution. An individual's profile is projected onto this cross-category distribution and normalised to acquire a proper probability value. The discrepancy may be calculated using Kullbac-Leibler (KL) divergence. The rationale is that after a period of time, an individual's situation is analysed to obtain the probability of them developing a certain type of disease using their risk factor. This is computed in the same manner as explained for QoLife. The probability distribution is compared against the individual's original distribution across the same set of diseases. The improvement or deterioration of the individual's health condition is quantified as the Kullbac-Leibler divergence between these two distributions.

The final QoP value is calculated by multiplying these three aspects together and scaling down the value using the logarithm function.

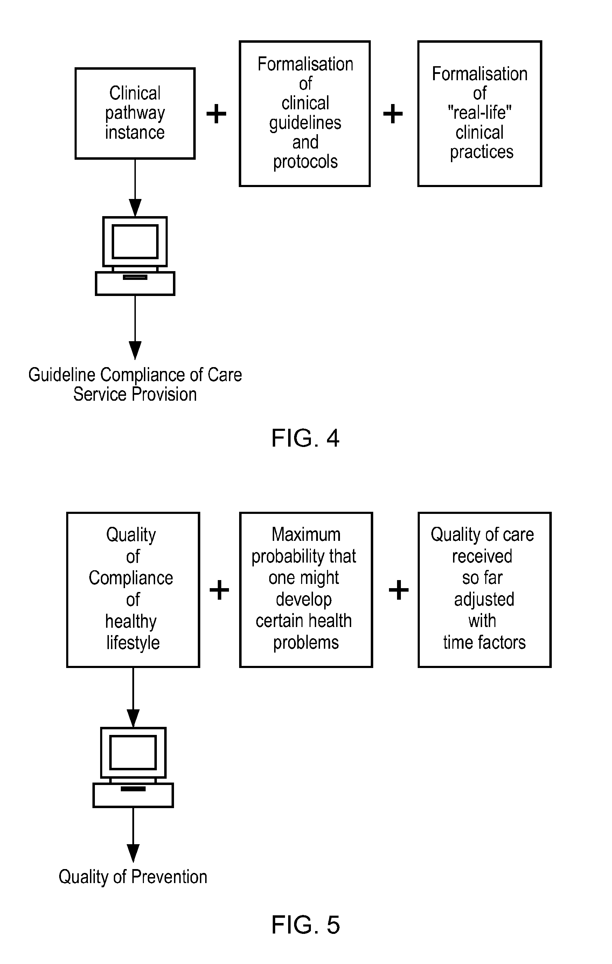

In summary, as shown in **Figure 4**, a QoSP value can be derived based on a pathway instance (extracted from social media data), a formalisation of clinical practice guidelines and protocols, and a formalisation of "real-life" clinical practices.

Similarly, as shown in **Figure 5,** a QoP value can be derived based on the quality of service provided so far (adjusted with time factors), the maximum probability that the individual may develop certain health problems, and the compliance of the individual to a healthy lifestyle.

Although the invention has been described primarily with respect to quality indicators used in healthcare, it may be applied analogously to other services. In particular, the invention may be used to provide a Key Performance Indicator (KPI) for assessing business processes and other services.

**Claims**

1. A computer system operable to quantify quality of service provision, the computer system comprising:

   a data log configured to store comments made by one or more users regarding a service;
   a data extraction module configured to extract one or more service pathway instances from the data log;
   a comparison module configured to select one of the extracted pathway instances and compare the selected pathway instance with one or more representative pathways; and
   a calculation module configured to calculate a quality of service provision value based on the similarity between the selected pathway instance and the representative pathways.

2. A computer system as claimed in claim 1, wherein the selected pathway instance and the representative pathways are represented as graphs; and wherein the calculation module is configured to determine the similarity between the selected pathway instance and the representative pathways based on graph edit distance.

3. A computer system as claimed in claim 2, wherein a calculation of the graph edit distance uses weights which correspond to the sentimental significance of an action within a pathway.

4. A computer system as claimed in claim 2 or 3, wherein the graph edit distance is calculated using semantic distance.

5. A computer system as claimed in any preceding claim, wherein the representative pathways are guideline pathways.

6. A computer system as claimed in any preceding claim, wherein the data extraction module is further configured to perform sentiment analysis on the one or more extracted pathway instances and to therefrom form one or more sentiment-based pathway models.

7. A computer system as claimed in claim 6, wherein the representative pathways comprise the sentiment-based pathway models.

8. A computer system as claimed in any preceding claim, wherein the data extraction module is configured to identify an event onset and an event end based on comments contained in the data log and to form a pathway instance based on comments made between the event onset and the event end.

9. A computer system as claimed in claim 8, wherein the data extraction module is further configured to offset comments in time based on their content.

10. A computer system as claimed in any preceding claim, wherein the data log comprises social media data.

11. A computer system as claimed in any preceding claim, wherein the service is a healthcare service.

12. A computer system as claimed in claim 11, wherein the calculation module is further configured to calculate a quality of prevention value based on the quality of service provision to date, a probability of the user developing health problems, and/or compliance of the user to a healthy lifestyle.

13. A computer system as claimed in claim 12, wherein a contribution of the quality of service provision to the calculated quality of prevention value decays with time elapsed since termination of the service.

14. A computer-implemented method operable to quantify quality of service provision, the method comprising:

extracting one or more service pathway instances from a data log containing comments made by one or more users regarding a service;
selecting one of the extracted pathway instances and comparing the selected pathway instance with one or more representative pathways; and
calculating a quality of service provision value based on the similarity between the selected pathway instance and the representative pathways.

15. A computer program which when executed on a computer carries out the method of the preceding method claim and/or which when downloaded onto a computer system causes it to become the computer system of any of the preceding apparatus claims.

2

6

4

8

10

FIG. 1

FIG. 2

FIG. 3

| Clinical pathway instance | **+** | Formalisation of clinical guidelines and protocols | **+** | Formalisation of "real-life" clinical practices |
|---|---|---|---|---|

Guideline Compliance of Care
Service Provision

## FIG. 4

| Quality of Compliance of healthy lifestyle | **+** | Maximum probability that one might develop certain health problems | **+** | Quality of care received so far adjusted with time factors |
|---|---|---|---|---|

Quality of Prevention

## FIG. 5

Europäisches
Patentamt

European
Patent Office

Office européen
des brevets

**EUROPEAN SEARCH REPORT**

Application Number

EP 12 17 6026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q10/00 |

TECHNICAL FIELDS
SEARCHED    (IPC)

G06Q

The present search report has been drawn up for all claims

| Place of search | Date of completion of the search | Examiner |
|---|---|---|
| Munich | 6 December 2012 | Anastasov, Yuliyan |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RODGERS et al.** *Distribution of Major Health Risks: Findings from the Global Burden of Disease Study,* 2004